# EUROPEAN PATENT APPLICATION

(11) **EP 4 040 124 A1**
(43) Date of publication of application: **10.08.2022**
(21) Application number: 21155727.7
(22) Date of filing: 08.02.2021
(51) Int. Cl.: G01K 1/08, G01K 1/14, G01K 13/02

(54) **TEMPERATURE MEASURING DEVICE AND FLANGE ASSEMBLY FOR SECURING THE TEMPERATURE MEASURING DEVICE TO A FLUID CONTAINER**

(71) Applicant: Bleckmann GmbH & Co. KG, 5112 Lamprechtshausen (AT)
(72) Inventor: HÖFER, Johann, 5113 ST. GEORGEN (AT); STEGER, Bernhard, 5661 RAURIS (AT)
(74) Representative: Eisenführ Speiser

(57) **Abstract**

A temperature measuring device as a component for a flange assembly for holding a heating device used within a domestic appliance, comprising: an elongated casing having a longitudinal central axis and a first end portion as well as an opposing second end portion; a printed circuit board defining a plane and arranged within the casing, wherein the printed circuit board has a first end portion and an opposing second end portion, and at least two conductive tracks; and at least one temperature sensor, preferably in the form of a NTC thermistor, which is directly mounted on said printed circuit board, wherein the conductive tracks respectively extend from the at least one temperature sensor to at least two terminal areas provided at least in the proximity of the second end portion of the printed circuit board, and wherein the casing is filled with a resin, in particular with a thermosetting resin, at least up to the vicinity of the terminal areas.

## Description

### FIELD OF THE INVENTION

The present invention relates to a temperature measuring device as a component for a flange assembly for holding a heating device used within a domestic appliance, a method of manufacturing a temperature measuring device as a component for a flange assembly for holding a heating device used within a domestic appliance and a flange assembly for holding a temperature measuring device and a heating device to a fluid container of an appliance accommodating the fluid to be heated, in particular a domestic appliance.

### BACKGROUND ART

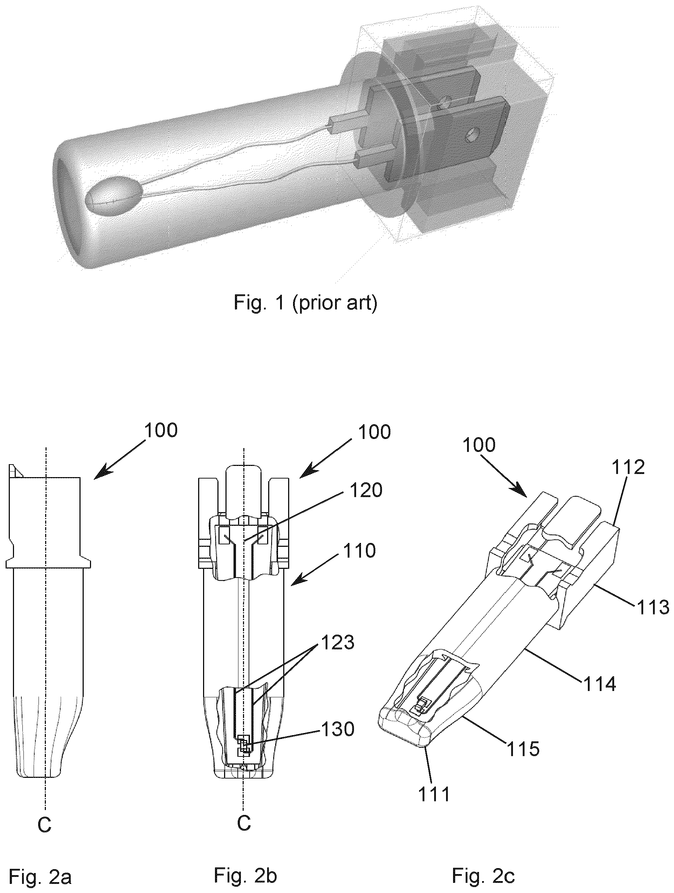

A temperature measuring device as a component for a flange assembly for holding a heating device used within a domestic appliance according to the state of art is described with reference to Fig. 1. In Fig. 1, a temperature measuring device is shown in a perspective and transparent view. The temperature measuring device which is used in practice at the present time comprises an elongated casing having a circular tube portion and a rectangular tube portion, a temperature sensor in the form of a pill with two flexible connecting wires and two connection plates attached to the respective ends of the connection wires. Further, the casing is filled with a resin to cover the pill, the connection wires and partly the connection plates.

The temperature measuring device according to the state of art suffers from disadvantages such as unpredictable response, as it is not possible to position the pill in a clearly predefined position within the casing due to the flexible properties of the connecting wires, which can deform when the resin is filled in. According to this, there is no possibility to position the pill at a clearly defined position, which is reproducible during manufacturing. This leads to different responses in the produced temperature measuring devices, which, in turn, leads to deviations in the temperature measurement. In other words, two temperature measuring devices are most likely to output different signals, which lead to different temperature outputs.

Further, the assembly of the components of the temperature measuring device is problematic and complex, as it is very important to mount the temperature sensor at a predefined position within the casing, so that it always has the same response. In particular, while filling in the resin, the temperature sensor moves in an unpredictable manner, which is not desired.

According to this, the objective of the present invention is to provide a temperature measuring device as a component for a flange assembly for holding a heating device used within a domestic appliance, a method of manufacturing a temperature measuring device as a component for a flange assembly for holding a heating device used within a domestic appliance and a flange assembly for holding a temperature measuring device and a heating device to a fluid container of an appliance accommodating the fluid to be heated, in particular a domestic appliance, which has a simplified and reproducible manufacturing process.

### SUMMARY OF THE INVENTION

The objective is achieved by a temperature measuring device as a component for a flange assembly for holding a heating device used within a domestic appliance according to the present invention as defined in independent claim 1, by a flange assembly for holding a temperature measuring device and a heating device to a fluid container of an appliance accommodating a fluid to be heated, in particular a domestic appliance as defined in independent claim 12, and by a method of manufacturing a temperature measuring device as a component for a flange assembly for holding a heating device used within a domestic appliance as defined in independent claim 15. Further developments of the present invention are defined in the dependent claims.

According to a first aspect, a temperature measuring device as a component for a flange assembly for holding a heating device used within a domestic appliance, comprising: an elongated casing having a longitudinal central axis and a first end portion as well as an opposing second end portion; a printed circuit board defining a plane and arranged within the casing, wherein the printed circuit board has a first end portion and an opposing second end portion, and at least two conductive tracks; and at least one temperature sensor, preferably in the form of a NTC thermistor, which is directly mounted on said printed circuit board, wherein the conductive tracks respectively extend from the at least one temperature sensor to at least two terminal areas provided at least in the proximity of the second end portion of the printed circuit board, and wherein the casing is filled with a resin, in particular with a thermosetting resin such as, for example; an epoxy resin, a polyurethane resin at least up to the vicinity of the terminal areas.

By filling a resin in the interior of the casing of the temperature measuring device, the printed circuit board including the temperature sensor is fixed in a predefined position. Further, the temperature sensor may be a NTC thermistor as well as a PTC thermistor or any other suitable temperature sensor.

In some embodiments of the temperature measuring device, the temperature sensor is a surface-mounted device (SMD). By using a surface-mounted device, the size of components can be reduced contrary to the state of art.

In some embodiments of the temperature measuring device, the temperature sensor is arranged in the proximity to the first end portion of the casing. According to this, a compact structure of the temperature measuring device can be ensured.

In some embodiments of the temperature measuring device, the first end portion of the casing has an asymmetrical cross-section with respect to the longitudinal central axis of the casing. By doing this, the printed circuit board is held in a predefined position, as the printed circuit board is in direct contact with the inner surface of the casing at the first end portion thereof.

In some embodiments of the temperature measuring device, the casing comprises a rectangular tube portion provided at the second end portion of the casing, followed by a circular tube portion, followed by a substantially rectangular tube portion with rounded corners, which tapers towards the first end portion of the casing at least in one direction, in particular in a direction perpendicular to the plane of the printed circuit board.

This configuration improves the fluid flow within the container. In particular, by using a substantially rectangular tube portion, in which the temperature sensor is housed, the temperature sensor is continuously surrounded by the fluid in such a way that turbulences can be reduced that occur when the temperature measuring device is flushed around. Further, the printed circuit board is held in a predefined position, as the printed circuit board is in direct contact with the inner surface of the casing at the first end portion thereof.

In some embodiments of the temperature measuring device, the casing comprises at least one support element for supporting the printed circuit board arranged on an inner surface of said casing.

By using support elements, it is possible to position the printed circuit board within the casing in a predefined position. This is particularly important in the manufacturing process of the temperature measuring device, as each temperature measuring device has to have the same response characteristics in order to guarantee their quality.

In some embodiments of the temperature measuring device, the at least one support element is configured to prevent a movement of the printed circuit board at least substantially in a direction perpendicular to the plane of the printed circuit board and/or the at least one support element is configured to prevent a movement of the printed circuit board at least substantially in at least a direction parallel to the plane of the printed circuit board. According to this, the printed circuit board including the temperature sensor can be inserted into the housing, without damaging any components. Further, according to this configuration, the printed circuit board is held in a predefined position, so that vibrations, which may occur during the spinning process of the domestic appliance, have no influence on the positioning of the printed circuit board.

In some embodiments of the temperature measuring device, the printed circuit board includes an upper surface and a bottom surface, wherein the at least one temperature sensor is mounted on the upper surface of the printed circuit board, and wherein a second temperature sensor is mounted on the bottom surface of the printed circuit board.

With this configuration, it is possible to measure two temperatures of the fluid within the container of the domestic appliance. According to this, it is, inter alia, possible to detect a calcification of the temperature measuring device, as in this case, the two measured temperatures will be significant different. Further, it may be possible to detect, if the temperature measuring device (i) is not covered by fluid, i.e. both temperature sensors detect an increased ambient temperature, which is higher than the desired fluid temperature; (ii) is completely covered by fluid, i.e. both temperature sensors detect fluid temperature; or (iii) is partly covered with fluid, i.e. the bottom temperature sensor detects fluid temperature and the upper temperature sensor detects a combined temperature of the fluid temperature and the ambient temperature.

In some embodiments of the temperature measuring device, the casing further comprises at least one introducer channel arranged at one of the inner surfaces of the casing. By using at least one introducer channel, the introduction of resin into the casing is simplified. Further, the introducer channel may additionally serve as a guiding for a plug to be plugged onto the rectangular tube portion of the casing.

In some embodiments of the temperature measuring device, a plug is plugged onto the rectangulartube portion of the casing, and wherein the plug comprises an elongated groove to receive the second end portion of the printed circuit board therein.

In some embodiments of the temperature measuring device, the plug further comprises at least one longitudinal guiding element positioned at an outer surface side of the plug, and wherein the at least one guiding element is configured to be plugged into the corresponding introducer channel of the casing.

While plugging the plug onto the rectangular tube portion of the casing, the guiding element engages with the introducer channel, and therefore serves as a guiding for the plug. According to this, it can be ensured that the plug is plugged in correctly, so that the printed circuit board is not damaged when the plug is plugged in.

According to a further aspect, a flange assembly for holding a temperature measuring device and a heating device to a fluid container of an appliance accommodating a fluid to be heated, in particular a domestic appliance, comprising: a flange unit arranged for being mounted to an opening of the fluid container by at least one fixing unit and having a non-sealing as well as a sealing and attachment state, wherein the flange unit is reversibly convertible from the non-sealing to the sealing and attachment state by means of the fixing unit for being configured to engage the opening of the fluid container in the sealing and attachment state, wherein the flange unit comprises a sealing element and a tensioning element, wherein the sealing element and the tensioning element are moveable relative to each other in an axial direction by means of the fixing unit such that the sealing element and the tensioning element can be pressed against each other, wherein the sealing element and the tensioning element are, in the sealing and attachment state, arranged to provide a sealing in a sealing direction perpendicular to the axial direction, and wherein the flange unit comprises at least one through opening extending through the sealing element and the tensioning element in the axial direction for receiving and holding the temperature measuring device according to any one of claims 1 to 11.

According to this configuration, it is possible to fix the temperature measuring device and the heating device in a predefined position, so that influences such as vibration of the domestic appliance have no effect on the functionality of the components, in particular on the temperature measuring device.

In some embodiments of the flange assembly, the sealing element and the tensioning element of the flange unit comprise each at least one tapered portion, and wherein the at least one tapered portion of the tensioning element overlays over the at least one tapered portion of the sealing element in the axial direction in at least the non-sealing state.

Since the sealing element and/orthe tensioning element of the flange unit comprise at least one tapered portion, upon relative movement of the sealing element and the tensioning element in the axial direction, the tapered portion can be displaced in a sealing direction, which is preferably perpendicular to the axial direction. In other words, based on the geometrical shape of the tapered portion, it is possible to realize a predefined displacement of the tapered portion in response to the relative movement between sealing element and tensioning element. In other words, depending on the angle, shape or form of the tapered portion with respect to the axial direction, a transition between the axial direction and the sealing direction concerning the displacement of the tapered portion in the sealing direction can be adjusted. Thereby, it is advantageously possible to define, in particular predefine, the displacement of the tapered portion and therefore the sealing of the sealing element in the sealing and attachment state (or sealing position for short) in advance.

In some embodiments of the flange assembly, the at least one tapered portion of the sealing element surrounds the through opening and the sealing element is arranged such that, in the sealing and attachment state, a defined displacement of the at least one tapered portion in the sealing direction holds the temperature measuring device and/or the heating device within the through opening.

According to a further aspect, a method of manufacturing a temperature measuring device as a component for a flange assembly for holding a heating device used within a domestic appliance, wherein the temperature measuring device comprises an elongated casing having a longitudinal central axis and a first end portion as well as an opposing second end portion; a printed circuit board defining a plane and arranged within the casing, wherein the printed circuit board has a first end portion and an opposing second end portion, and at least two conductive tracks; and at least one temperature sensor, preferably in the form of a NTC thermistor, which is directly mounted on said printed circuit board, wherein the conductive tracks respectively extend from the at least one temperature sensor to at least two terminal areas provided at least in the proximity of the second end portion of the printed circuit board, and wherein the casing is filled with a resin, in particular with a thermosetting resin such as, for example, an epoxy resin, a polyurethane resin at least up to the vicinity of the terminal areas, the method comprises the steps of: mounting the temperature sensor on the printed circuit board, arranging the printed circuit board substantially completely in the casing, so that the printed circuit board extends from the first end portion to the second end portion of the casing, and filling the casing with resin, in particular with thermosetting resin, so that the printed circuit board including the temperature sensor is covered by the resin at least up to the vicinity of the terminal areas.

Further advantages and preferred embodiments of the present invention will be described in the following together with the drawings listed below. The expressions "left", "right", "below" and "above" used in the following description are referred to the drawings in an alignment such that the reference numbers and the notation of the figures used can be read in normal orientation.

### BRIEF DESCRIPTION OF THE DRAWINGS

- Fig. 1: illustrates a temperature measuring device in a perspective, transparent view according to the state of art,
- Figs. 2a, 2b and 2c: show a side view, a top view with cutaways, and a perspective view depicted from a first end of a casing of an inventive temperature measuring device with cutaways of a temperature measuring device according to the present invention,
- Fig. 3: shows a perspective cross-sectional view of the temperature measuring device according to the invention depicted from an end of the casing opposite to said of Fig. 2c,
- Fig. 4: shows a perspective view of an exemplary printed circuit board of the temperature measuring device according to the invention,
- Fig. 5: shows a perspective view of another exemplary printed circuit board of the temperature measuring device according to the present invention,
- Fig. 6: shows a perspective view of another exemplary printed circuit board of the temperature measuring device according to the present invention,
- Figs. 7a, 7b and 7c: illustrate a side view and a top view with cutaways, and an exploded perspective view of a temperature measuring device with a plug according to the present invention,
- Fig. 8: illustrates a perspective view with cutaways of a flange assembly according to the invention,
- Fig. 9: shows a perspective view of the flange assembly according to the present invention,
- Fig. 10: shows a side view with cutaways of the flange assembly according to the present invention, and
- Figs. 11a and 11b: illustrate a cross-sectional view of the flange assembly according to the present invention in a non-sealing state as well as a sealing and attachment state

### DETAILED DESCRIPTION

First, an exemplary temperature measuring device 100 as a component for a flange assembly 10 for holding a heating device 80 used within a domestic appliance according to the present invention is described with reference to Figs. 2a, 2b and 2c. Fig. 2a shows a side view, Fig. 2b a top view with cutaways and Fig. 2c a perspective view with cutaways of a temperature measuring device 100 according to the present invention.

The exemplary temperature measuring device 100 comprises an elongated casing 110 having a longitudinal central axis C and a first end portion 111 as well as an opposing second end portion 112, a printed circuit board 120 defining a plane and arranged within casing 110, wherein printed circuit board 120 has a first end portion 121 and an opposing second end portion 122, and at least two conductive tracks 123. The plane is defined by the upper surface 124 of printed circuit board 120, i.e. upper surface 124 of printed circuit board 120 forms the plane. At least one temperature sensor 130, preferably in the form of a NTC thermistor, is directly mounted on printed circuit board 120, wherein temperature sensor 130 comprises two connecting areas 132 for connecting respective conductive tracks 123 thereto. Conductive tracks 123 respectively extend from temperature sensor 130 to at least two terminal areas provided at least in the proximity of second end portion 122 of printed circuit board 120. Further, casing 110 is filled with a resin, in particular with a thermosetting resin, at least up to the vicinity of the terminal areas.

Moreover, casing 110 may be divided into three portions. Starting at second end portion 112 of casing 110, there is a rectangular tube portion 113, followed by a circular tube portion 114, followed by a substantially rectangular portion with rounded corners 115. Substantially rectangular portion 115 may also be a tube portion with a cross-section in the shape of a regular oval. Further, substantially rectangular portion 115 preferably tapers towards first end portion 111 at least in one direction, in particular in a direction perpendicular to the plane of printed circuit board 120. This results in an asymmetric tapering of substantially rectangular portion 115 with respect to circular tube portion 114. Further, casing 110 is closed at first end portion 111 thereof. Substantially rectangular portion 115 may also be tapered towards first end portion 111 of casing 110 in a direction parallel to the plane of printed circuit board 120. According to this, first end portion 111 of casing 110 has an asymmetrical cross-section with respect to longitudinal central axis C of casing 110. Casing 110 is made of a non-conductive material, preferably a plastic material such as a thermosetting plastic or polymer, which can be manufactured, for instance, by injection molding or a different suitable process known in the art. However, also different materials, such as materials comprising or consisting of rubber or thermoplastic components, are considered.

Printed circuit board 120 is arranged within casing 110, wherein printed circuit board 120 preferably has an elongated shape, which extends from first end portion 111 of casing 110 to second end portion 112 of casing 110. Further, printed circuit board 120 has a first end portion 121 and an opposing second end portion 122. First end portion 121 of printed circuit board 120 is arranged in the proximity to first end portion 111 of casing 110, preferably in direct contact with first end portion 111 of casing 110. Accordingly, second end portion 122 of printed circuit board 120 is positioned in the proximity to second end portion 112 of casing 110. Printed circuit board 120 includes an upper surface 124 and a bottom surface 125. A temperature sensor 130 is mounted on upper surface 124 of printed circuit board 120. Preferably, temperature sensor 130 is positioned at the proximity of first end portion 121 of printed circuit board 120.

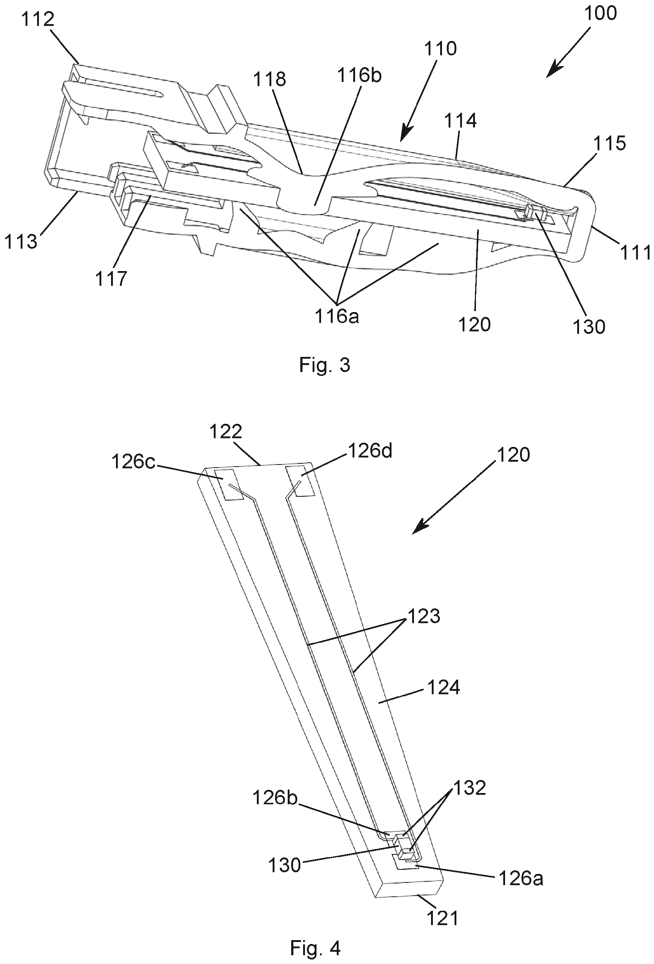

As can be inferred from Fig. 3, casing 110 may comprise at least one support element 116a, 116b configured to hold printed circuit board 120 in a predefined position within casing 110. Fig. 3 shows an exemplary casing 110 comprising three support elements 116a, which extend from the upper inner surface and/or the bottom inner surface of casing 110. Support elements 116a prevent a movement of printed circuit board 120 in a direction perpendicular to the plane of printed circuit board 120. Further, casing 110 preferably comprises a support element 116b, which extends from a side inner surface and/or an opposing side inner surface of casing 110. Support element 116b prevents a movement of printed circuit board 120 in a direction parallel to the plane of printed circuit board 120, accordingly. Support elements 116a, 116b are in direct contact with printed circuit board 120 either punctually or over a predefined surface.

Further, casing 110 preferably is tapered towards first end portion 111 of casing 110 in at least one direction, preferably in a direction perpendicular to the plane of printed circuit board 120. As a consequence, bottom surface 125 of first end portion 121 of printed circuit board 120 lies directly on the bottom inner surface of casing 110. Dueto this cross-sectional change, the bottom of the inside of casing 110 can also form a support element.

Moreover, casing 110 includes introducer channels 117 arranged at one of the inner surfaces of casing 110. In the exemplary casing 110 shown in Fig. 3, introducer channels 117 are positioned on the bottom surface of casing 110, wherein introducer channels 117 extend in a direction from second end portion 112 to first end portion 111 of casing 110, in particular to the end of rectangular tube portion 113. Introducer channels 117 are configured to provide paths for the resin to be filled in afterwards. Further, introducer channels 117 may serve as guiding means for a plug 140, which is to be plugged onto second end portion 112 of casing 110. Casing 110 in which printed circuit board 120 is housed is preferably filled with a resin, in particular a thermosetting resin, up to rectangular tube portion 113 of casing 110, which accordingly is not filled with resin. As a consequence, during operation printed circuit board 120 and also temperature sensor 130 is held in a clearly and reproducible predefined position. Further, as there is no air between casing 110 and temperature sensor 130, a good heat transfer can be ensured.

Optionally, circular tube portion 114 of casing 110 includes at least one rounded recess 118 at the outer surface thereof. Rounded recess 118 is configured to form a handling portion to enable better handling of temperature measuring device 100. On the other hand, as rounded recess 118 extends into the interior of casing 110, rounded recess 118 may also function as a support element configured to hold printed circuit board 120 in a predefined position.

Fig. 4 illustrates a perspective view of an exemplary printed circuit board 120 of temperature measuring device 100 according to the invention. Printed circuit board 120 preferably has an elongated shape having a first end portion 121 and a second end portion 122, which is tapered in the direction to first end portion 121 of printed circuit board 120. Further, printed circuit board 120 includes an upper surface 124 and a bottom surface 125. In the exemplary printed circuit board 120 shown in Fig. 4 only upper surface 124 is equipped with components, such as pads 126, a temperature sensor 130 and conductive tracks 123.

Two pads 126a, 126b, i.e. a first pad 126a and a second pad 126b, are arranged next to each other in the proximity to first end portion 121 of printed circuit board 120, wherein first pad 126a is positioned closer to first end portion 121 of printed circuit board 120 as second pad 126b. First pad 126a and second pad 126b are arranged in parallel to each other. Further, printed circuit board 120 includes a third pad 126c and a fourth pad 126d positioned at second end portion 122 of printed circuit board 120. Third pad 126c and fourth pad 126d are arranged next to each other at the edges of second end portion 122 of printed circuit board 120, respectively. First pad 126a is electrically connected with third pad 126c via a first conductive track 123. Respectively, second pad 126b is electrically connected with fourth pad 126d via a second conductive track 123.

A temperature sensor 130 is mounted on printed circuit board 120, more precisely on first pad 126a and second pad 126b. Temperature sensor 130 is preferably a NTC thermistor, and more preferably a surface-mounted device (SMD) NTC thermistor. Temperature sensor 130 includes two connecting areas 132, wherein one connecting area 132 is mounted on first pad 126a and the other connecting area 132 on second pad 126b.

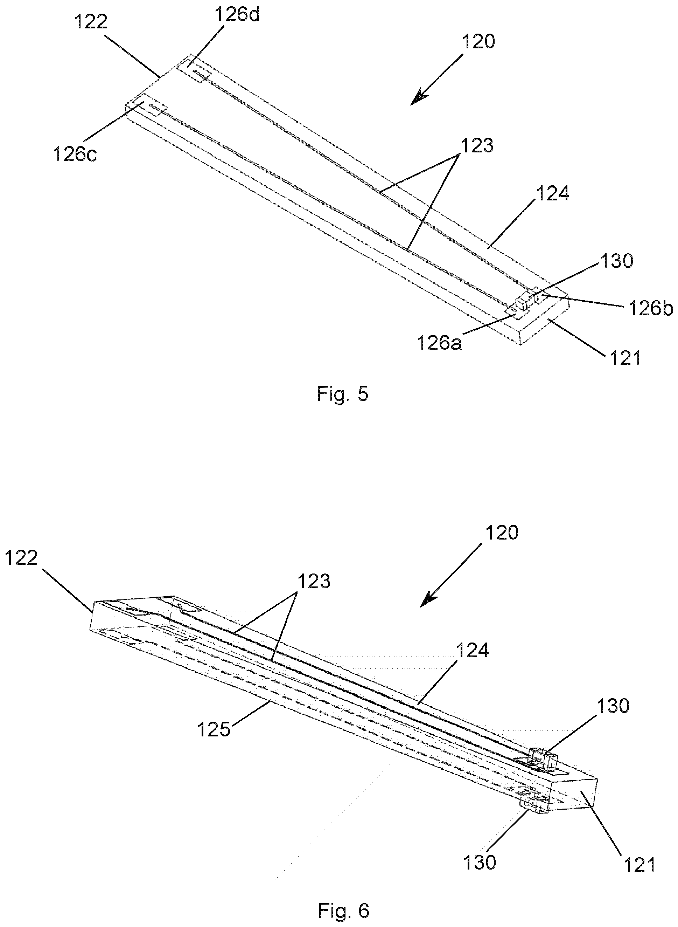

Fig. 5 illustrates an optional alternative of the arrangement of first pad 126a and second pad 126b. In this exemplary alternative, first pad 126a and second pad 126b are arranged next to each other in the proximity to first end portion 121 of printed circuit board 120, wherein first pad 126a is positioned in the same distance to first end portion 121 of printed circuit board 120 as second pad 126b. First pad 126a and second pad 126b are arranged in parallel to each other. According to this configuration, it is possible to form conductive tracks 123 as straight paths, as shown in Fig. 5.

Fig. 6 shows another exemplary printed circuit board 120 of the present invention. This printed circuit board 120 preferably has an elongated shape having a first end portion 121 and a second end portion 120, which is tapered in the direction to first end portion 121 of printed circuit board 120. Further, printed circuit board 120 includes an upper surface 124 and a bottom surface 125. In the exemplary printed circuit board shown in Fig. 6, upper surface 124 as well as bottom surface 125 is equipped with components, such as pads 126, a temperature sensor 130 and conductive tracks 123.

Two pads 126a, 126b, i.e. a first pad 126a and a second pad 126b, are arranged next to each other in the proximity to first end portion 121 on upper surface 124 of printed circuit board 120, wherein first pad 126a preferably is positioned closer to first end portion 121 of printed circuit board 120 as second pad 126b. First pad 126a and second pad 126b are arranged in parallel to each other. Further, printed circuit board 120 includes a third pad 126c and a fourth pad 126d positioned at second end portion 122 of printed circuit board 120. Third pad 126c and fourth pad 126d are arranged next to each other at the edges of second end portion 122 of printed circuit board 120, respectively. First pad 126a is electrically connected with third pad 126c via a first conductive track 123. Respectively, second pad 126b is electrically connected with fourth pad 126d via a second conductive track 123.

A first temperature sensor 130 is mounted on upper surface 124 printed circuit board 120, more precisely on first pad 126a and second pad 126b. First temperature sensor 130 is preferably a NTC thermistor, and more preferably a surface-mounted device NTC thermistor. First temperature sensor 130 includes two connecting areas 132, wherein one connecting area 132 is mounted on first pad 126a and the other connecting area 132 on second pad 126b.

In the exemplary printed circuit board 120 shown in Fig. 6, in the same manner, a second temperature sensor 120, four pads 126 and two conductive tracks 123 are arranged on bottom surface 125 of printed circuit board 120. Accordingly, the arrangement and positioning of the components, i.e. temperature sensor 120, pads 126 and conductive tracks 123, is the same as on upper surface 124 of printed circuit board 120 shown in Fig. 4.

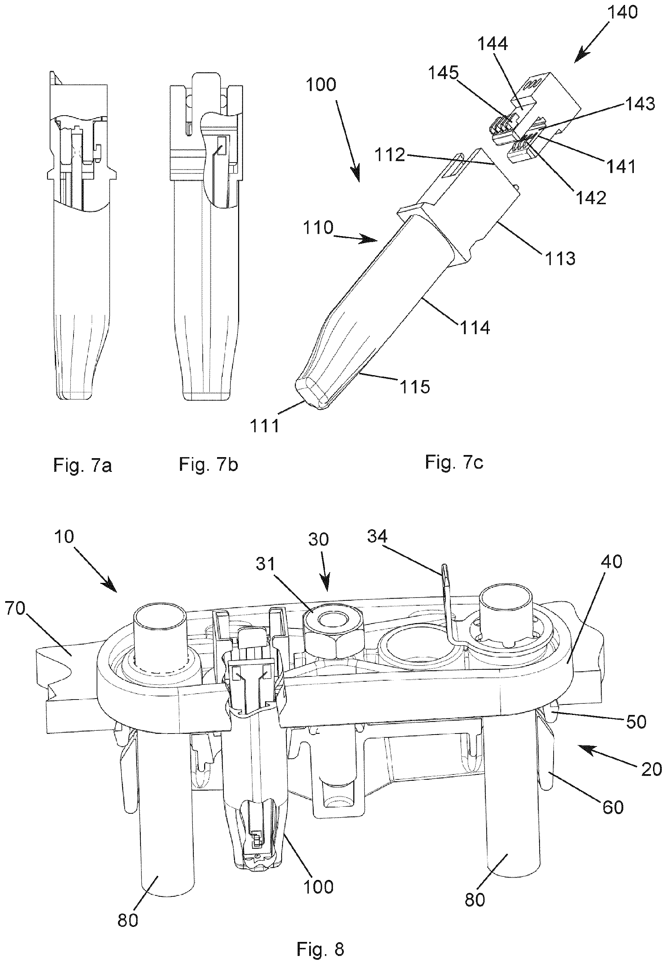

Figs. 7a illustrates a side view and Fig. 7b a side view both with cutaways, and Fig. 7c an exploded perspective view of a temperature measuring device 100 with a plug 140 according to the present invention.

As can be inferred from Figs. 7a and 7b, a plug 140 is plugged onto rectangular tube portion 113 of casing 110, i.e. at second end portion 112 of casing 110. Plug 140 preferably is a snap-in plug, which is configured in such a way that it can be snapped into rectangular tube portion 113 of casing 110. Further, plug 140 preferably has an elongated groove 141 to receive second end portion 122 of printed circuit board 120 therein. At least two signal pick-up pins 142 are integrated in an inner side surface 143 of groove 141 of plug 140, which are in electrical contact with third pad 126c and fourth pad 126d of printed circuit board 120 when assembled, i.e. plugged on.

Moreover, plug 140 preferably has at least one longitudinal guiding element 145 positioned at an outer side surface 144 of plug 140 and to be plugged into corresponding introducer channels 117 of casing 110. According to this, the at least one longitudinal guiding element 145 serves to guide plug 140 while plugging it in. As a consequence, it is ensured that printed circuit board 120 is not damaged while plugging in plug 140.

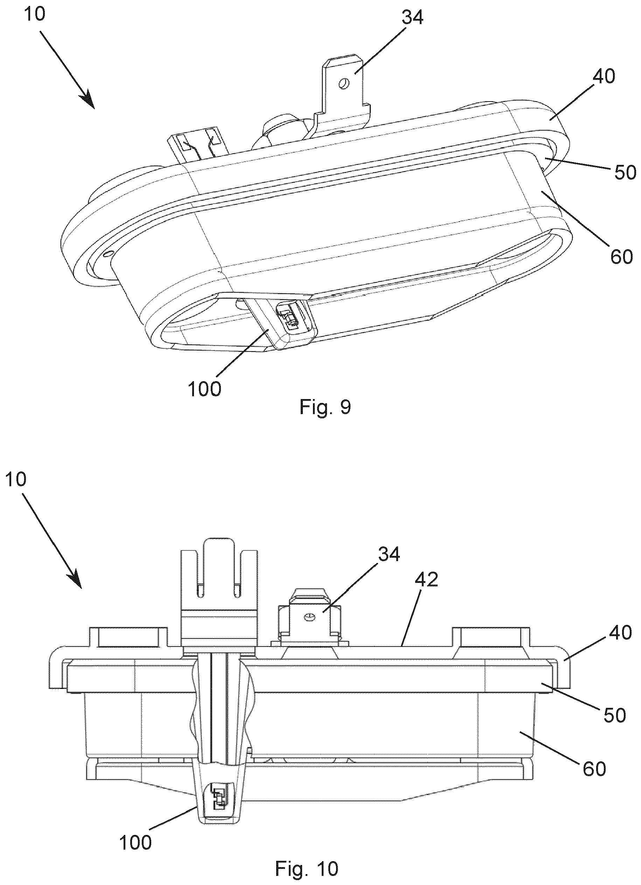

Fig. 8 illustrates a perspective view with cutaways of a flange assembly 10 for holding a temperature measuring device 100 and a heating device 80 to a fluid container of an appliance 70 according to the invention. In particular, Fig. 8 shows through openings 18a, 18b respectively provided for inserting heating device 80 as well as through opening 18c provided for inserting temperature measuring device 100. Fig. 9 shows a further perspective view of flange assembly 10 illustrated in Fig. 8, wherein heating device 80 has been omitted in this figure. Respectively, Fig. 10 illustrates a top view with cutaways of the flange assembly 10 shown in Fig. 8.

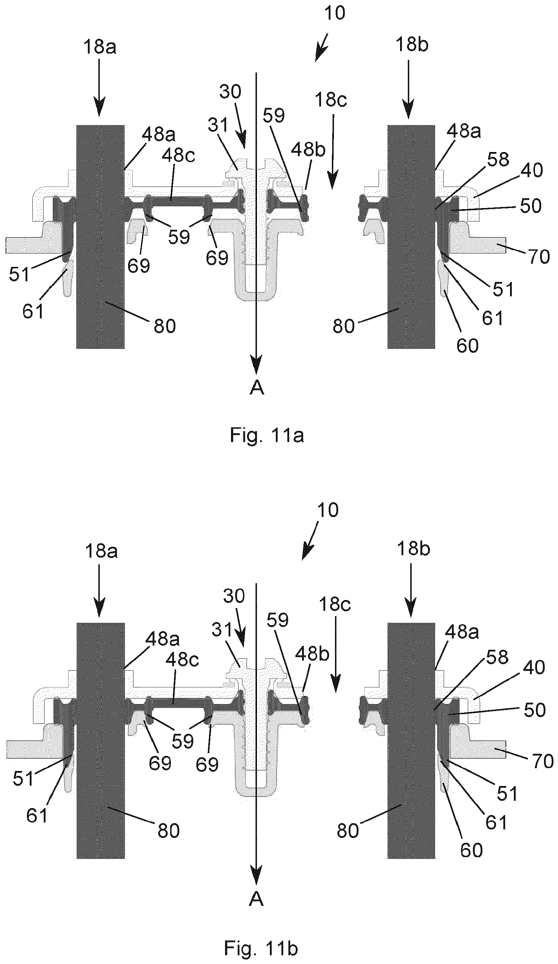

Figs. 11a and 11b illustrate a cross-sectional view of the flange assembly 10 according to the present invention in a non-sealing state as well as a sealing and attachment state, respectively.

The exemplary flange assembly 10 comprises a flange unit 20, a fixing unit 30 and a cover unit 40. Flange unit 20 comprises a sealing element 50 and a tensioning element 60. In an axial or insertion direction A, which corresponds basically to an axial direction of fixing unit 30 from a surface side of cover unit 40 to the rear of flange assembly 10, cover unit 40 abuts sealing element 50, which abuts tensioning element 60, respectively.

Fixing unit 30 comprises in this example a screw 31 for linking and tensioning sealing element 50, tensioning element 60 and possibly cover unit 40 as will be detailed below. A ground connecting portion 34 is provided in proximity to screw 31 or heating device 80 for connecting flange assembly 10 to ground.

In these figures, flange assembly 10 is shown mounted to appliance 70 and having heating device 80 inserted into through openings 18a, 18b. Through openings 18a, 18b through which heating device 80 is inserted are formed by heating device openings 48a provided on base plate 42 of cover unit 40. Sealing element 50 and tensioning element 60 provide openings at positions corresponding to heating device openings 48a along axial direction A. Sealing element 50 comprises at the circumferential surface surrounding heating device 80 a tapered portion 51, 59 and tensioning element 60 comprises at the position corresponding to tapered portion 51, 59 of sealing element 50 a tapered portion 61, 69. As can be seen from Fig. 11b, since tensioning element 60 is tensioned against sealing element 50, tapered portion 61, 69forces tapered portion 51, 59 radially inward into through opening 18 and against heating device 80, such that heating device 80 is securely received within through opening 18a, 18b of flange assembly 10.

Another through opening 18c is provided radially inward with respect to heating device openings 48a through which heating device 80 is inserted. This through opening 18c is formed by temperature measuring device opening 48b on base plate 42 of cover unit 40. Sealing element 50 and tensioning element 60 provide openings at positions corresponding to the temperature measuring device opening 48b along axial direction A. Similar to tapered portions 51, 59 and 61, 69, respectively provided at sealing element 50 and tensioning element 60 adjacent heating device opening 48a, there are provided tapered portions 51, 59 and 61, 69 about through opening 18c corresponding to temperature measuring device opening 48b. Similar to heating device 80, temperature measuring device 100 (not shown) can thus be securely received and sealed within temperature measuring device opening 48b by the relative movement and force of tensioning element 60 applied against sealing element 50.

Although in this example a heating device 80 and/or a temperature measuring device 100 is intended to be inserted through one or more of through openings 18a, 18b, 18c, also different devices or elements can be inserted in different applications.

In this example, tapered portion 51, 59 is provided in the shape of a partial dual cone, that is a tapered region is formed both on the front side, i.e. the side adjacent cover unit 40, and on the rear side, i.e. the side adjacent tensioning element 60.

In addition to the sealing force induced by tapered portion 51, 59, in this example all openings surrounding through openings 18a, 18b, 18c formed in sealing element 50 for receiving heating device 80, temperature measuring device 100, or a different element, respectively, are provided with one or more sealing lip 58 at the inner circumferential surface of respective tapered portion 51, 59. Sealing lip 58 is in this example formed as an O-ring and provides for a frictional seal between sealing element 50, more precisely tapered portion 51, 59, and the respective elements inserted therein in addition to the seal provided by the radial displacement of tapered portion 51, 59.

In this example, at least one sealing lip 58 formed as an O-ring is provided at each of the respective tapered portions 51, 59. However, in other examples, sealing lips 58 are not necessarily provided, can be provided only at some of the respective openings, and/or can be formed by O-rings as in this example or by different sealing elements as known in the art.

In Fig. 11a, there is also a blind temperature measuring device opening 48c illustrated. Blind temperature measuring device opening 48c is blind and no opening, as base plate 42 of cover unit 40 and sealing element 50 are not open at that position. Nevertheless, a through hole is formed in tensioning element 60 and tapered portions 51, 59 and 61, 69 are respectively provided in sealing element 50 and tensioning element 60 at the position corresponding to blind temperature measuring device opening 48c. Blind temperature measuring device opening 48c must not necessarily have a particular function, but allows for tensioning element 60 to be manufactured regularly and symmetrically, such that tensioning element 60 can be mounted on sealing element 50 in this direction or rotated about 180 degrees about a central axis, which is defined by fixing unit 30 and corresponds to the position of the arrow indicating axial direction A in the drawings, without any difficulties. In other words, blind temperature measuring device opening 48c facilitates manufacture and allows for a symmetrical design and production of tensioning element 60. In this example, tensioning element 60 is preferably formed of a plastics material. Further, sealing element 50 is preferably formed of an elastomeric material, such as a plastic elastomeric material. Preferably, both sealing element 50 and tensioning element 60 are manufactured by processing methods such as injection molding, as widely known in the art. However, also employing other materials and/or manufacturing processes are contemplated by the person skilled in the art.

In order to strengthen the positioning of sealing element 50, tensioning element 60 may be provided with more material wherever appropriate, in particular at through openings 18a, 18b, 18c where heating device 80 and temperature measuring device 100 are inserted, respectively. Furthermore, stiffening rips may be provided at tensioning element 60.

A method of manufacturing a temperature measuring device 100 as a component for a flange assembly 10 for holding a heating device 80 used within a domestic appliance, wherein temperature measuring device 100 comprises an elongated casing 110 having a longitudinal central axis C and a first end portion 111 as well as an opposing second end portion 112; a printed circuit board 120 defining a plane and arranged within casing 110, wherein printed circuit board 120 has a first end portion 121 and an opposing second end portion 122, and at least two conductive tracks 123; and at least one temperature sensor 130, preferably in the form of a NTC thermistor, which is directly mounted on printed circuit board 120, wherein conductive tracks 123 respectively extend from the at least one temperature sensor 130 to at least two terminal areas provided at least in the proximity of second end portion 122 of printed circuit board 120, and wherein casing 110 is filled with a resin, in particular with a thermosetting resin, at least up to the vicinity of the terminal areas. The method comprises the steps of: mounting temperature sensor 130 on printed circuit board 120, arranging printed circuit board 120 substantially completely in casing 110, so that printed circuit board 120 extends from first end portion 111 to second end portion 112 of casing 110, and filling casing 110 with resin, in particular with thermosetting resin, so that printed circuit board 120 including temperature sensor 130 is covered by the resin at least up to the vicinity of the terminal areas.

### REFERENCE SIGNS

- 10: Flange assembly
- 18a, 18b, 18c: Through openings
- 20: Flange unit
- 30: Fixing unit
- 31: Screw
- 34: Ground connecting portion
- 40: Cover unit
- 42: Base plate
- 48a: Heating device opening
- 48b: Temperature measuring device opening
- 48c: Blind temperature measuring device opening
- 50: Sealing element
- 58: Sealing lip
- 51, 59: Tapered sealing portion
- 60: Tensioning element
- 61, 69: Tapered tensioning portion
- 70: Appliance
- 80: Heating device
- 100: Temperature measuring device
- 110: Casing
- 111: First end portion
- 112: Second end portion
- 113: Rectangular tube portion
- 114: Circular tube portion
- 115: Substantially rectangular tube portion with rounded corners
- 116a, 116b: Support elements
- 117: Introducer channels
- 118: Rounded recess
- 120: Printed circuit board
- 121: First end portion
- 122: Second end portion
- 123: Conductive tracks
- 124: Upper surface
- 125: Bottom surface
- 126a,126b, 126c, 126d: Pads
- 130: Temperature sensor
- 132: Connecting areas
- 140: Plug
- 141: Elongated groove
- 142: Signal pick-up pins
- 143: Inner side surface
- 144: Outer side surface
- 145: Guiding element
- A: Axial direction
- C: Central axis

## Claims

1. A temperature measuring device (100) as a component for a flange assembly (10) for holding a heating device (80) used within a domestic appliance, comprising:
an elongated casing (110) having a longitudinal central axis (C) and a first end portion (111) as well as an opposing second end portion (112);
a printed circuit board (120) defining a plane and arranged within the casing (110), wherein the printed circuit board (120) has a first end portion (121) and an opposing second end portion (122), and at least two conductive tracks (123); and
at least one temperature sensor (130), preferably in the form of a NTC thermistor, which is directly mounted on said printed circuit board (120),
wherein the conductive tracks (123) respectively extend from the at least one temperature sensor (130) to at least two terminal areas provided at least in the proximity of the second end portion (122) of the printed circuit board (120), and
wherein the casing (110) is filled with a resin, in particular with a thermosetting resin, at least up to the vicinity of the terminal areas.

2. The temperature measuring device (100) according claim 1,
wherein the temperature sensor (130) is a surface-mounted device.

3. The temperature measuring device (100) according to claim 1 or 2,
wherein the temperature sensor (130) is arranged in the proximity to the first end portion (111) of the casing (110).

4. The temperature measuring device (100) according to any one of claims 1 to 3,
wherein the first end portion (111) of the casing (110) has an asymmetrical cross-section with respect to the longitudinal central axis (C) of the casing (110).

5. The temperature measuring device (100) according to any one of claims 1 to 4,
wherein the casing (110) comprises a rectangular tube portion (113) provided at the second end portion (112) of the casing (110), followed by a circulartube portion (114), followed by a substantially rectangular tube portion with rounded corners (115), which tapers towards the first end portion (111) of the casing (110) at least in one direction, in particular in a direction perpendicular to the plane of the printed circuit board (120).

6. The temperature measuring device (100) according to any one of claims 1 to 5,
wherein the casing (110) comprises at least one support element (116a, 116b) for supporting the printed circuit board (120) arranged on an inner surface of said casing (110).

7. The temperature measuring device (100) according to claim 6,
wherein the at least one support element (116a) is configured to prevent a movement of the printed circuit board (120) at least substantially in a direction perpendicular to the plane of the printed circuit board (120) and/or the at least one support element (116b) is configured to prevent a movement of the printed circuit board (120) at least substantially in at least a direction parallel to the plane of the printed circuit board (120).

8. The temperature measuring device (100) according to any one of claims 1 to 7,
wherein the printed circuit board (120) includes an upper surface (124) and a bottom surface (125),
wherein the at least one temperature sensor (130) is mounted on the upper surface (124) of the printed circuit board (120), and
wherein a second temperature sensor (130) is mounted on the bottom surface (125) of the printed circuit board (120).

9. The temperature measuring device (100) according to any one of claims 1 to 8,
wherein the casing (110) further comprises at least one introducer channel (117) arranged at one of the inner surfaces of the casing (110).

10. The temperature measuring device (100) according to any one of claims 1 to 9,
wherein a plug (140) is plugged onto a rectangular tube portion (113) of the casing (110), and
wherein the plug (140) comprises an elongated groove to receive the second end portion (122) of the printed circuit board (120) therein.

11. The temperature measuring device (100) according to claim 10,
wherein the plug (140) further comprises at least one longitudinal guiding element (145) positioned at an outer surface side (144) of the plug (140), and
wherein the at least one guiding element (145) is configured to be plugged into the corresponding introducer channel (117) of the casing (110).

12. A flange assembly (10) for holding a temperature measuring device (100) and a heating device (80) to a fluid container of an appliance (70) accommodating a fluid to be heated, in particular a domestic appliance, comprising:
a flange unit (20) arranged for being mounted to an opening of the fluid container by at least one fixing unit (30) and having a non-sealing as well as a sealing and attachment state, wherein the flange unit (20) is reversibly convertible from the non-sealing to the sealing and attachment state by means of the fixing unit (30) for being configured to engage the opening of the fluid container in the sealing and attachment state,
wherein the flange unit (20) comprises a sealing element (50) and a tensioning element (60),
wherein the sealing element (50) and the tensioning element (60) are moveable relative to each other in an axial direction (A) by means of the fixing unit (30) such that the sealing element (50) and the tensioning element (60) can be pressed against each other,
wherein the sealing element (50) and the tensioning element (60) are, in the sealing and attachment state, arranged to provide a sealing in a sealing direction perpendicular to the axial direction (A), and
wherein the flange unit (20) comprises at least one through opening (18) extending through the sealing element (50) and the tensioning element (60) in the axial direction (A) for receiving and holding the temperature measuring device (100) according to any one of claims 1 to 11.

13. The flange assembly (10) according to claim 12,
wherein the sealing element (50) and the tensioning element (60) of the flange unit (20) comprise each at least one tapered portion (51, 59; 61, 69), and
wherein the at least one tapered portion (61, 69) of the tensioning element (60) overlays over the at least one tapered portion (51, 59) of the sealing element (50) in the axial direction (A) in at least the non-sealing state.

14. The flange assembly (10) according to claim 12 or 13,
wherein the at least one tapered portion (59) of the sealing element (50) surrounds the through opening (18) and the sealing element (50) is arranged such that, in the sealing and attachment state, a defined displacement of the at least one tapered portion (59) in the sealing direction holds the temperature measuring device (100) and/or the heating device (80) within the through opening (18).

15. A method of manufacturing a temperature measuring device (100) as a component for a flange assembly (10) for holding a heating device (80) used within a domestic appliance, wherein the temperature measuring device (100) comprises an elongated casing (110) having a longitudinal central axis (C) and a first end portion (111) as well as an opposing second end portion (112); a printed circuit board (120) defining a plane and arranged within the casing (110), wherein the printed circuit board (120) has a first end portion (121) and an opposing second end portion (122), and at least two conductive tracks (123); and at least one temperature sensor (130), preferably in the form of a NTC thermistor, which is directly mounted on said printed circuit board (120), wherein the conductive tracks (123) respectively extend from the at least one temperature sensor (130) to at least two terminal areas provided at least in the proximity of the second end portion (122) of the printed circuit board (120), and wherein the casing (110) is filled with a resin, in particular with a thermosetting resin, at least up to the vicinity of the terminal areas,
the method comprises the steps of:
mounting the temperature sensor (130) on the printed circuit board (120),
arranging the printed circuit board (120) substantially completely in the casing (110), so that the printed circuit board (120) extends from the first end portion (111) to the second end portion (112) of the casing (110), and
filling the casing (110) with resin, in particular with thermosetting resin, so that the printed circuit board (120) including the temperature sensor (130) is covered by the resin at least up to the vicinity of the terminal areas.
